# EUROPEAN PATENT SPECIFICATION

(11) **EP 3 532 544 B1**
(45) Date of publication and mention of the grant of the patent: **28.04.2021**
(21) Application number: 18815266.4
(22) Date of filing: 11.10.2018
(51) Int. Cl.: C09D 133/08, C04B 41/00, C04B 41/48, C04B 41/63, C08K 3/22, C08K 3/36, C08K 9/06, C09D 5/02, C09D 7/61

(54) **POLYMER DISPERSION AND METHOD OF PRODUCING THE SAME**
POLYMERDISPERSION UND VERFAHREN ZU IHRER HERSTELLUNG
DISPERSION DE POLYMÈRE ET SON PROCÉDÉ DE PRODUCTION

(30) Priority: 11.10.2017 FI 20175895
(43) Date of publication of application: 04.09.2019
(73) Proprietor: Build Care Oy, 01450 Vantaa (FI)
(72) Inventor: KOPONEN, Vesa, deceased (FI)
(74) Representative: Laine IP Oy
(86) International application number: PCT/FI2018/050735
(87) International publication number: WO 2019/073122

(56) References cited:
- US-A1- 2007 238 827
- US-A1- 2012 094 115
- US-A1- 2015 184 016
- DATABASE WPI Week 201401 Thomson Scientific, London, GB; AN 2013-K01014 XP002788274, & CN 102 965 018 A (SHANDONG BEIFANG CHUANGXIN WATERPROOF) 13 March 2013 (2013-03-13)

## Description

### Field of the Invention

The present invention relates to polymer dispersions. In particular, the present invention relates to a water based polymer dispersion according to the preamble of Claim 1, which dispersion comprises a polymer which is dispersed in water and solid particles mixed with it.

The present invention also relates to a method of producing a polymer dispersion according to the preamble of Claim 13.

### Description of Related Art

Water-based polymer dispersions are well-known. They are used, for example, as adhesives, in paints and for coating of paper and cardboard products.

Furthermore, water-based polymer dispersions have been used in water-based coatings. These are described, for example, in application publications EP 0 794 018 A2 and EP 1 544 268 A1. Publication US 2012/094115 A1 discloses a coating composition based on aqueous emulsion wherein polymer particles comprising different polymerized monomers, such as alkyl methyl acrylate monomers, are dispersed into aqueous medium. However, the weatherproof properties of the water-based coatings have proved to be inadequate, characteristic features being, among others, detachment, peeling off and cracking of the coatings.

### General description of the present invention

The purpose of the present invention is to reduce or even completely eliminate the abovementioned problems encountered in the prior art.

In particular, the purpose of the present invention is to generate novel polymer dispersions which, for example, are suitable for the manufacturing of coatings and films.

Another purpose of the present invention is to generate novel coatings and films.

The present invention is based on the finding that by adding solid matter to a polymer dispersion that comprises a water-dispersed polymer, which is in the form of polymer particles, a polymer composition can be generated, in which the dispersed polymer particles remain at such a suitable distance from each that it is advantageous for the controlled formation of a film.

Preferably, the distance which is suitable for the film formation is, in particular, achieved by adding solid matter which has a larger average particle size than the polymer particles and is capable of at least partially absorbing these polymer particles. This prevents uncontrollable caking of the dispersion, which could otherwise be caused by polymer particles coming too close to each other. On the other hand, particles that are spaced too far apart cannot form a uniform film, which is necessary to achieve a uniform coating

By bringing the components of the polymer composition sufficiently close to each other, secondary links are formed between them, in which case a film is formed of the dispersion.

From the dispersion according to the present invention, a polymer film can be obtained by reducing the space between the polymer particles, for example by removing moisture, i.e. water, between the particles.

The dispersion can be applied or spread on a solid surface, textile or a mesh. However, it is also possible to make self-supporting polymer films of the dispersion. In this way, a coating may be formed, particularly an elastic (flexible) coating which is suitable for example as an adhesive, coating or waterproofing.

More specifically, the composition according to the present invention is characterized by what is stated in the characterizing part of Claim 1.

The method according to the present invention is in turn characterized by what is stated in the characterizing part of Claim 13.

Considerable advantages can be achieved with the present invention. Thus, a solid and potentially solidifying aggregate in combination with the polymer particles form a strengthened three-dimensional film-like structure.

It is possible that as a result of the interaction between the polymer dispersion and the aggregate, a cross-linked structure is formed which is based, for example, on chemical bonds between the components and/or secondary bonds, such as ionic or coordinate bonds to form an ionomer-type structure, for example. However, this is only one possibility and the scope of protection of the present invention is not limited to this explanation.

The dispersion according to the present invention can be used to generate a coating that adheres well to all surfaces, even if the surface is wet before coating. It is therefore well suited for preparing waterproofing.

According to a preferred embodiment of the present invention, organic solvents are not used in the dispersion. In this embodiment, the dispersion is free from organic solvents, and is more preferably water-based. The use of water as the liquid phase of the dispersion makes it possible to generate an ecological and toxic-free layer, such as a film.

The non-toxicity and environmental friendliness of the product according to the present invention are also supported by the fact that problematic compounds, such as isocyanates, fluorinated compounds or styrene that are commonly found in various coatings, are not used when manufacturing the product.

Therefore, the use of this method is safe and easy to use. When the dispersion is used, for example, for generating a coating, it is not necessary for the coater to be protected against the dangers of organic solvents, for example the wearing of a gas mask. Also, the spaces which are treated can be used immediately after the coating is dried, without ventilation, and there are no health hazards and risks of an explosion during evaporation of the solvent, even when small enclosed spaces are being coated. The use of a solvent-free dispersion is therefore very safe.

The coating has good adhesion also to wet surfaces.

The coating generated is based on a reinforced cross-linked structure formed by the dispersion, which structure is based on the chemical interactions between the dispersion components.

The polymer layer that is generated is already waterproof when it is a thin film but, if necessary, its thickness may be several centimetres.

If desired, the gas impermeability of the film can also be improved by adding to the dispersion an initially soluble absorbent material, which is solidified during the precipitation and film-forming stage.

Although the polymer film has good waterproof and gasproof properties, it has a good breathability and water vapour permeability.

In the following, preferred embodiments of the present invention will be described in more detail.

### Embodiments

The dispersion as herein described generally comprises
i) one or more solid matters in at least mainly solid form, in the following also referred to as aggregate,
ii) one or more polymers, and
iii) one or more surface-active agents, and
iv) one or more precipitants.

In addition, the dispersion also comprises a medium, i.e. a liquid into which the components described are dispersed.

In one embodiment, the present aqueous polyacrylate dispersion comprises
a. a polymer dispersion having particles of different sizes or having a wide multimodal or bimodal particle size distribution,
b. a dispersed metal compound such as metal salt, metal oxide or metal sulphate, or metal ions, and
c. components that facilitate crosslinking of polymers, such as aluminium oxide, silicon dioxide, or combinations thereof.

In addition to these components a-c, the dispersion typically includes a dispersing agent such as a surface-active agent.

By homogenising the mixture, a homogenised, stable polymer dispersion is achieved.

A polymer layer, such as a coating or film, is generated from the polymer dispersion. In particular, the dispersions described are capable of forming a reinforced film, which is based on a molecular cross-linked structure, based on chemical interactions between the crosslinking components, i, ii and iv and, correspondingly, a-c, in the abovementioned embodiments.

"Polymer dispersion" or "dispersion", respectively, refers in the present context to a composition wherein the polymer or polymers are present and are dispersed in the medium. The polymer dispersions also comprise other dispersed, finely divided components. Most suitably, the particle sizes of all dispersed components are less than 10 micrometres, especially less than 5 micrometres. In this context, the term "dispersion" also includes other compositions in which liquid or solid components are dispersed in the continuous phase.

In one preferred embodiment, the dispersion provides a solid matter-containing polymer cross-linked structure which is a viscoelastic elastomer, which can be demonstrated, for example, by a time-rupture test. When the composition forms an elastic film, the cross-linked structure is formed by chemical bonds between the substances, preferably through weak chemical interactions, such as ionic bonds, coordination bonds, dipole-dipole interactions or Van der Waals bonds.

The composition may be an ionomer by nature.

### Polymers

The present dispersion comprises one or more polymers, at least one of which is an acrylate polymer. In particular, the dispersion comprises the polymer or polymers in dispersed form.

In one embodiment, the dispersion comprises at least two different polymers.
In one embodiment, the dispersion includes a copolymer, which consists of at least two different types of acrylate monomer.

The liquid phase of the dispersion, i.e. "dispersion medium", preferably contains water. More preferably, the dispersion is essentially free from volatile organic solvents. Thus, the percentage of water is at least 95 %, most suitably at least 97 %, of the liquid volume of the entire dispersion medium.

In one embodiment, a dispersion, which comprises two or more homo- or copolymers having polymer particles of different sizes, is generated by mixing with each other two or more different and distinct polymer dispersions.

The polymer dispersions to be mixed may differ from each other in order that that they comprise different polymers, their monomer composition differs from one another, or in order that their particle size distributions differ from each other. The particle size distribution of the generated dispersion may be, for example, a multimodal distribution, such as a bimodal distribution, and may comprise one or more, especially two or more polymers.

In the present context, the term "multimodal" particle size distribution includes both the case where one and the same polymer has a particle size distribution exhibiting several peaks, and the case where two polymers have particle size distributions, the peaks of which differ from each other. A broad, one-peak distribution is also included in this concept.

In one embodiment, the particle size of the polymer dispersion has a polydispersity index of more than 1.5, especially more than 2.

The polymer used in the dispersion most suitably comprises reactive groups, such as carboxylic acid groups or generally acrylic acid functionality or vinyl groups, such as vinyl esters, which allows the generated coating to adhere to different substrate surfaces. When an appropriate polymer or polymers is chosen, it is possible to affect the properties of the coating and tailor the coating to suit different applications. Thus, the choice of polymers affects, for example, the interaction between the polymers in the dispersion, the formation of the cross-linked structure, and the formation of bonds with other added elements, when the coating is dried or hardened or when the film formation occurs.

The choice of polymer also determines other desired properties of the generated coating, such as weatherproofness, water impermeability, chemical resistance, and elasticity.

Typically, the coating or film generated from the composition according to the present invention is highly weatherproof and chemically resistant and inert.

According to one embodiment, a polymer which can be dispersed in the aqueous phase is used. At least one of the dispersion polymers is an acrylate polymer. Most suitably, the dispersion comprises at least two polymers of different average particle size, which are acrylate polymers.

In this context, "acrylate polymer" refers to polymers and copolymers prepared from acrylic acid or its esters. Thus, here "acrylate polymers" also include acrylate copolymers. Acrylate polymers have a low glass transition temperature, typically at maximum + 6 °C, especially approximately -36 °C to ±0 °C, and they have good adhesion properties.

In one embodiment, the acrylate polymer or acrylate copolymer comprises one or, correspondingly, more of the units according to Formula I 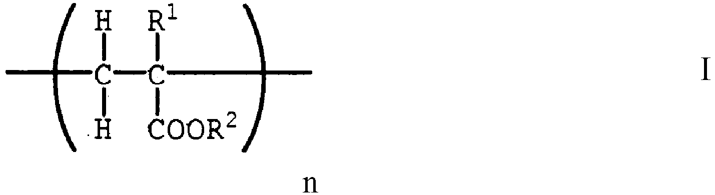 where
R¹ and R²
   independently of each other, represent hydrogen, lower, straight or branched alkyl, aryl and alkaryl, which is optionally substituted, and
n is an integer from 10 to 10,000, typically approximately 100 to 2500.

The acid monomer of the acrylate polymer is typically acrylic acid or methacrylic acid, and, in addition, the comonomers used can be butyl acrylate, 2-ethylhexyl acrylate, methyl methacrylate and styrene, or mixtures thereof. In addition, itaconic acid, maleic acid, fumaric acid, and mixtures thereof may be used.

By using the alternative substituents of Formula I, it is possible to affect the formation of the polymer dispersion, the hydrophilicity or, correspondingly, the hydrophobicity, glass transition temperature of the polymer, and chemical interactions, when other components, such as metal compounds are added.

Example of the aryl derivative include phenyl and of the alkaryls styrene.

Examples of suitable acrylate polymers include polymethyl acrylate and styrene-acrylic copolymer and mixtures thereof.

The polymer may also be polyvinylpyrrolidone, polyvinyl acetate or polyvinyl alcohol, most suitably mixed with an acrylate polymer. The mass ratio of the acrylic polymer and one or more other polymers is most suitably 10:90-99:1, especially 20:80-95:5. Different copolymers are also possible.

The dispersion polymer acts as the elastic matrix of the generated coating or film, which matrix is generated when the polymer is cross-linked, which is achieved when the liquid phase between the particles evaporates or water is otherwise removed from the dispersion (for example, the water may be absorbed into the substrate). In this case, the polymer component of the dispersion forms, through the film-forming event, a layer, most suitably a uniform layer.

The polymers included in the dispersion may differ from each other, with regard to the particle size of the dispersed polymer particles. In a more preferred embodiment, two or more polymers are used in the dispersion, at least one polymer of which has a substantially larger particle size than the other or the others.

In one embodiment, the first polymer, which has a particle size larger than the particle size of the other polymer, preferably acts as a matrix of the polymer layer, such as a coating or film, and reinforces the strength properties of the coating. The other polymer having a particle size smaller than the particle size of the first polymer will, in turn, densify the structure of the polymer layer by filling the empty spaces between the larger particles. It also forms the film faster than the polymer having a larger particle size. The particle size distribution of the polymer can thus also affect the formation rate of the coating. Because different polymers have different adhesion properties, the choice of polymer may affect the range of application of the product generated by the method. The choice of polymers makes it also possible to adjust the hydrophilicity and hydrophobicity of the product for various applications.

Typically, the ratio between the average particle size of the particles of the first polymer and, correspondingly, the other polymer or of the other polymers included in the dispersion, is at least 1.25:1, especially at least 1.5:1, and most suitably approximately 2:1-100:1, typically approximately 2.5:1-10:1.

In one embodiment, the first, larger-sized polymer has an average particle size of approximately 0.25-1 µm, and the other, smaller-sized polymer has an average particle size of approximately 0.01-0.2 µm.

In one embodiment, the first polymer comprises an acrylate polymer, especially an acrylate copolymer having a polymer particle size of approximately 500±50 nm, and the other polymer comprises an acrylate polymer, especially an acrylate copolymer having a polymer particle size of approximately 100±10 nm.

The weight ratios in the mixture between the mole fractions of the first and, correspondingly, the other polymer or other polymers may be for example 1:100-100:1, most suitably approximately 1:20-20:1, for example 1:5-5:1.

"Particle size of polymer" means an average particle size that can be determined, for example, by light or electron microscope, based on light-scattering, such as based on multiangle laser light-scattering (MALLS) or by using a device which functions according to the Coulter principle.

In one embodiment, the dispersion comprises a mixture which is formed by mixing with each other two polymer dispersions, the polymers of which have different average particle sizes.

In one embodiment, the polymer or polymers are acrylate polymers, which can be used or which are used as dispersions, the dry matter content of which is at least 30 % by weight or at least 35 % by weight. Typically, the acrylate polymer dispersions used have a dry matter content of at maximum approximately 85 % by weight.

In one embodiment, the first polymer can be used or is used as a dispersion, the dry matter content of which is approximately 50-70 % by weight, for example approximately 55-65 % by weight.

In one embodiment, the other polymer can be used or is used as a dispersion, the dry matter content of which is approximately 30-50 % by weight, for example approximately 35-45 % by weight.

In one embodiment, alkaline polymer dispersions are used. Such polymer dispersions are typically anionically stabilised. In this embodiment, the pH value of the polymer dispersions is higher than for example approximately 7, especially higher than approximately 8, most suitably higher than approximately 9. However, the pH value of the polymer dispersions is typically lower than approximately 14.

In one embodiment, acidic polymer dispersions are used. Such polymer dispersions are typically cationically stabilised. In this embodiment, the pH value of the polymer dispersions is for example lower than approximately 7, especially lower than approximately 6.5, most suitably lower than approximately 6. However, the pH value of the polymer dispersions is typically higher than approximately 1.

In one embodiment, where two or more initial material-polymer dispersions that are mixed with each other, are used to prepare the polymer dispersion, both or all of the initial material-polymer dispersions are either anionically or cationically stabilised.

### Surface-active agent

The surface-active agent, i.e. the dispersant, is capable of keeping the polymer dispersed in the liquid phase during the preparation and storage of the composition.

Such a dispersant is typically a monomeric or polymeric surface-active agent. Polymer dispersions are generally anionically stabilised but they may also be cationically stabilised.

Examples of surface-active agents include sodium lauryl sulphate and alkyl benzene sulphonic acid or sulphonate, such as sodium dodecyl diphenyloxide disulphonate.

The amount of the surface-active agent is generally approximately 0.01-5 % of the amount of polymer.

In one embodiment, the surface-active agent is not added separately to the polymer dispersion, but one or more polymer dispersions are used as the initial material for the dispersion preparation, wherein the polymer or polymers are dispersed with an emulsifier, i.e. a surface-active agent, into a medium such as water. In this case, this medium also forms the dispersion medium of the dispersion to be prepared.

### Aggregate

In the present context, "aggregate" means a substance which is added in a solid and preferably finely divided form, for example as powder, granules or particles, into a polymer solution. The aggregate may be partly or completely soluble in the liquid phase, i.e. the aqueous phase, but most of the aggregate may also be in solid form in the dispersion.

The aggregate is generally an inorganic substance, most suitably an oxide compound or a sulphate compound, such as a metal or semi-metal oxide or sulphate, or a mixture thereof. The metals include aluminium, gallium and tin, and transition metals such as iron, copper, zinc, chromium, vanadium, nickel, titanium and zirconium. The semi-metals include silicon, germanium and antimony.

It is also possible to use corresponding hydroxide compounds which are either insoluble or poorly soluble in water.

According to one embodiment at least some of the aggregate particles have an average size of 0.01-0.2 µm, especially approximately 0.02-0.15 µm. Most suitably, at least 1 % by weight, especially approximately 2.5-50 % by weight of the aggregate, consists of such particles.

According to one embodiment, at least some of the aggregate particles have an average size of 0.2-7.5 µm, especially approximately 0.5-5 µm, for example 1-3 µm. Most suitably, at least 1 % by weight, especially approximately 2.5-50 % by weight of the aggregate, consists of such particles.

According to one embodiment, the aggregate comprises a percentage of particles, the average particle size of which is 0.025-1 µm, especially approximately 0.1-0.75 µm. The percentage of such particles of the aggregate is generally at least 50 % by weight, especially approximately 60-99 % by weight.

In one embodiment, the amount of aggregate which is incorporated in the composition is approximately 1-25 % by weight, especially approximately 5-20 % by weight, for example approximately 7.5-16 % by weight, calculated from the dry matter.

Choosing the particle size can affect the gas permeability, i.e. breathability of the polymer layer which is formed of the dispersion. A larger number of pores that are generated between larger particles when the material is drying makes the layer more breathable.

The aggregate may partially dissolve into the liquid phase of the dispersion, but during the precipitation process the aggregate typically returns to a solid, insoluble state. The state of the aggregate can be affected, for example, by changing the pH value or pressure during the process.

According to the present invention, the dispersion comprises one or more aggregates. According to a preferred embodiment of the present invention, the aggregate contained in the dispersion comprises one or more iron or aluminium compounds or combinations thereof.

According to a more preferred embodiment, the aggregate comprises a mixture of iron and aluminium compounds. Preferably, both the iron and aluminium compounds are oxides or the iron compound is iron oxide and the aluminium compound is aluminium hydroxide.

According to one embodiment, the average particle size of the iron compound particles contained in the aggregate is in the range 0.025-1 µm, preferably in the range 0.1-0.5 µm, more preferably in the range 0.15-0.3 µm, for example 0.2 µm.

Preferably, the percentage of iron compound particles in the aggregate is 50-99 % by weight, more preferably 75-98 % by weight.

According to one embodiment, the average particle size of the aluminium compound particles contained in the aggregate is in the range 0.01-0.2 µm, preferably in the range 0.02-0.1 µm, for example 0.06 µm.

According to another embodiment, the average particle size of the aluminium compound particles contained in the aggregate is in the range 0.2-7.5 µm, preferably in the range 0.5-5 µm, for example 1-3 µm.

Preferably, the percentage of aluminium compound particles in the aggregate is 1-50 % by weight, more preferably 2-25 % by weight.

According to one embodiment, the weight ratio of particulate aluminium and iron compounds in the aggregate is in the range 1:99-1:1, for example 1:50-1:2, preferably in the range 1:9-1:3.

The iron compound may be, for example, ferrous, ferric or iron (II, III) oxide. These, in particular the last-mentioned, provide adhesion properties to the polymer to be precipitated from the dispersion.

The aluminium compound may be, for example, aluminium oxide or aluminium hydroxide, such as precipitated aluminium hydroxide.

In one embodiment, the purpose of the aggregate is, after the addition of the coagulator and in water-insoluble state, either as such or after dissolving and subsequent re-precipitation, to act as an internal adhesive surface between the polymers that have been coagulated to an insoluble state, thereby increasing the strength and elasticity of the finished product.

In one embodiment, the solid aggregate particles contained in the dispersion act as precipitation nuclei of the dispersion, to which nuclei the polymer particles precipitate when the surface-active agent ceases to have an effect, and/or the liquid phase between the particles evaporates.

In one embodiment, the solid aggregate acts in the structure as an internal adhesion surface by filling the "volumes" between the polymer particles, thereby acting in the finished coating to inhibit any cracking resulting from shrinkage, because it forms a three-dimensional internal support structure which reduces changes in the volume of the finished coating. In this way, the aggregate is able to act as an inhibitor of cracking resulting from shrinkage. At the same time, in the present embodiment, the aggregate acts as a densifier and strength enhancer of the product.

In one embodiment, it has been found that by increasing the density of the film formed by the dispersion, the decomposition of the concrete surfaces to be coated can be slowed down. In particular, coating renders it possible to slow down the carbonation of the concrete. It is also possible to prevent or at least slow down such loss of strength of concrete, which is caused by increase in porosity of the concrete, which is caused by, for example, the washing away of the water-soluble components of the concrete.

In one embodiment, an aggregate is used which at least partly dissolves in the liquid phase of the dispersion. In this case, the dissolved part of the aggregate can act as an accelerator in the precipitation reaction of the polymer particles, and as an adstringement of the polymer particles. This is relevant for the interaction between the polymer particles and the aggregate particles.

The aggregate generally improves the product properties of the coating or film formed of the dispersion, for example by slowing down the corrosion of the structures and surfaces to be protected by the coating or film, and the decomposition of concrete surfaces.

In one embodiment, the reaction between the dissolved part of the aggregate and the surface-active agent can also prevent the re-dissolution of the surface-active agent or the surface-active agents of the dispersion, after the precipitation event.

In one embodiment, the aggregate comprises iron compounds or aluminium compounds or mixtures thereof; typically, the dissolved part of the aggregate comprises positively charged iron or aluminium ions or mixtures thereof. Especially the dissolved part comprises Fe²⁺, Fe³⁺ or Al³⁺ ions or mixtures thereof.

In one embodiment, iron oxide (Fe₃O₄) is used as the aggregate. This slows down, for example, the corrosion of a steel surface to be protected by a coating or film to be formed of a dispersion.

In one embodiment, the dissolved part of the aggregate may form secondary bonds with points having opposite charges of the dipoles of the polymer particles, by using electrostatic forces.

By choosing the aggregate or the aggregates, it is possible to appropriately affect the properties of the dispersion, its precipitation speed, and the properties of the generated coating.

### Coagulator

To promote the formation of a film, a coagulator is used, i.e. a "precipitant", which provides a structure which is cross-linked in a controlled way. According to one embodiment of the present invention, a film is formed of the dispersion by removing moisture, i.e. by allowing the dispersion, which is spread to form a layer, to dry

The coagulator and the surface-active agent interact in such a manner that the evaporation of the liquid phase of the dispersion, while the coating dries, leads to a situation in which the surface-active agent is no longer capable of keeping the polymer particles of the dispersion apart, by means of electrical repulsion forces, and the polymer particles are cross-linked and form a solid structure in which the polymer matrix includes aggregate particles and coagulator particles.

According to one embodiment of the present invention, solidification of the dispersion and crosslinking of the polymer are prevented by using the hydrophobic component contained in the coagulator, until the liquid phase of the dispersion, preferably water, has evaporated or, correspondingly, absorbed into the surface materials which delineate the solid surface to be coated, to such an extent that the hydrophobic component can no longer prevent precipitation.

In one embodiment of the present invention, the formation of a cross-linked structure from the dispersion is prevented by the hydrophobic component of the coagulator, until the dispersion is brought to such a pressure that the hydrophobic component can no longer prevent crosslinking. This can be achieved, for example, by spraying the dispersion with high pressure spraying.

When spraying using higher pressure, the drop size of the spray decreases and the air contact increases, which promotes the removal of water.

In the method according to the present invention, one coagulator or a mixture of several coagulators is used in the dispersion. In particular, a solid, finely divided coagulator or a mixture of two or more solid, finely divided coagulators is used.

According to one embodiment, the coagulator is a material which comprises silicon dioxide such as vaporised silicon dioxide (fumed silica). Silicon dioxide can be used in hydrophilic form, hydrophobic form and as a mixture thereof.

According to one embodiment, a coagulator such as silicon dioxide is in hydrophobic form (hereinafter also referred to as "hydrophobic part"). In such a form the hydroxyl groups of the silicon dioxide surface are replaced by hydrocarbon groups. An example of a hydrophobic component is vaporised silicon dioxide, which is treated with dimethyl dichlorosilane.

The hydrophobic part is, for example, in colloidal form.

The hydrophobic part can be used to reduce or completely prevent the crosslinking of the dispersion polymer and to improve the adhesion between the aggregate particles and the dispersion polymer particles during and after the crosslinking.

The hydrophobic part can also be used to adjust the rate of crosslinking, because the hydrophobic part of the coagulator may be used to keep separate the components involved in the crosslinking reaction, until the required amount of dispersion liquid phase has evaporated or the pressure of the dispersion has changed, thereby triggering the crosslinking process.

Hydrophobic silicon dioxide contributes to the aggregate remaining dispersed.

Hydrophilic silicon dioxide can also be vaporised silicon dioxide. Hydrophilic silicon dioxide comprises hydroxyl groups on its surface and it is typically water-absorbing. Hydrophilic silicon dioxide also affects the pH value of the composition.

The weight ratio of the hydrophobic and, correspondingly, the hydrophilic silicon dioxide is generally 25:1-1:25, especially approximately 10:1-1:10, for example approximately 1:8.

The total amount of the hydrophilic and the hydrophobic silicon dioxide, as the precipitating agent, is approximately 1-6 % by weight of the dry matter.

The coagulator such as silicon dioxide is typically finely divided. In one embodiment, at least one coagulator has an average particle size of approximately 5-100 nm, most suitably 10-25 nm.

The amount of coagulator is typically approximately 0.01-10 % by weight, for example 0.1-7.5 % by weight, usually 1-5 % by weight, of the dry matter.

The coagulator reduces the dripping of the coating or film generated, by using thixotropic crosslinking. This property allows the method according to the present invention to be used also to coat vertical or downwardly oriented surfaces, such as the inner surfaces of roofs. In addition, the coagulator typically increases the wet strength of the generated coating or film.

The hydrophobicity of the coagulator also makes it possible to adjust the drying rate of the generated coating or film. The more hydrophobic components the coagulator comprises, the faster the coating and the membrane will dry. The hydrophobicity of the coagulator also makes it possible to control the pore size of the coating and film. The pore size of the coating and film determines the "breathability" of the coating, i.e. the substance which comprises hydrophobic component prevents moisture penetrating into the coating or film and, in turn, into the material to be coated, while at the same time it tends to remove possible moisture from the material to be coated, onto the surface of the coating or film, by repelling moisture.

In one embodiment, the hydrophobic component prevents solidification of the dispersion, until the dispersion is brought to such a pressure that the hydrophobic component can no longer prevent the crosslinking of the polymer.

Coagulation of the dispersion is prevented by, for example, the hydrophobic component contained in the dispersion, until the liquid phase of the dispersion, preferably water, has evaporated and/or been absorbed into the surface materials which delineate the solid surface to be coated to such an extent that the hydrophobic component can no longer prevent crosslinking.

Controlling of coagulation and also the non-dripping property of the coating can also be carried out with various acids, such as oxalic acid, acetic acid or citric acid, and various other thixotropic agents. Their amounts are approximately 0.1-10 % by weight of the dry matter. These materials can be used instead of or in combination with silicon dioxide.

### Other additives

The dispersion used in the method according to the present invention may also comprise different additives.

Controlling of coagulation and also the non-dripping property of the polymer layer can also be carried out with various acids, such as oxalic acid, acetic acid or citric acid, and various other thixotropic agents.

Useful additives are, among others, various microspheres as a filler and/or a rigidity regulator.

Other fillers include, for example, aluminium hydroxide, aluminium silicate, kaolin, talc and other magnesium and aluminium silicate-based materials, calcium silicate, calcium carbonate, zinc carbonate, calcium sulphate, barium sulphate, magnesium carbonate, silicon dioxide such as diatomaceous earth, which may be mineral, precipitated or pyrogenic, titanium dioxide, zinc oxide, ground cork and various fibrous filling and reinforcing fibres. Examples of the last mentioned include polymer fibres, such as polypropylene and polyamide fibres, as well as natural fibres such as cellulose, lignocellulose and cellulose pulp fibres.

Crushed rock and powder generated from rock material, as well as natural sand, can also be used as fillers

The dispersion may also comprise various colourants. Colourants include carbon black, calcium carbonate, titanium dioxide, barium sulphate, zinc oxide, antimony and cadmium sulphide, iron oxides, chromium oxides, nickel titanate and various organic pigments.

The amount of additives is generally approximately 0.1-80 % of the solid matter content of the dispersion. In particular, the amount of potential fillers is approximately 1-75 % of the solid matter content of the dispersion.

### Preparation of the composition

The compositions described above are prepared by adding, while stirring, the aggregate to a polymer dispersion, in which the polymer is dispersed in a suitable medium, such as water. The addition can be made at room temperature.

The polymer dispersion can be generated by mixing with each other the dispersion formed of the first dispersed polymer and the dispersion formed of the second dispersed polymer, in which case the first and, correspondingly, the second dispersed polymer have average particle sizes which differ from each other.

The aggregate to be added is most suitably one or more iron or aluminium compounds, or a mixture of one or more iron compounds and one or more aluminium compounds.

The polymer dispersion may be a dispersion formed of one polymer, or it can be formed by mixing together two or more polymer dispersions, the polymers of which have different average particle sizes.

Most suitably, the surface-active agent is not separately added but the initial material used is a polymer dispersion, in which the polymer is dispersed with a surface-active agent, in particular into the aqueous phase. However, it is possible to introduce additional surface-active agents into the dispersion.

Generally, the amount of surface-active agent is approximately 0.1-5 % of the dry matter of the dispersion.

After the addition of the aggregate, coagulator or coagulators are also added, while briskly mixing, to the dispersion thus generated.

By homogenising the generated mixture, a stable (non-settling) dispersion is achieved.

The pH value of the composition is maintained, during the addition of the aggregate and the coagulator, above or, correspondingly, below the limit value of the pH, at which the polymer-aggregate starts to solidify from the dispersion. The pH value is determined according to the emulsification of the polymer; the polymers used in the method are either anionically or cationically stabilised, as noted above.

According to one embodiment, the pH value of the dispersion is maintained, while adding the metal oxide particles and the coagulator, at a value which is above 7, when the polymers are anionically stabilised.

According to another embodiment, the pH value of the dispersion is maintained, while adding the metal oxide particles and the precipitant, at a value which is below 6.5, at which point the polymers are cationically stabilised.

The present polymer dispersion comprises, per 100 parts by weight of dispersed material (i.e., 100 parts by weight of the dry matter of the dispersion):
- 70-90 parts by weight of acrylatc polymer,
- 5-15 parts by weight of aggregate particles, and
- 0.1-5 parts by weight of coagulator or coagulators.

In addition, the dispersion comprises liquid as the dispersion medium, such as water, the amount of which is determined according to the dry matter content.

The polymer dispersion according to the present invention is very durable. Typically, its storage time is at least 10 hours, in particular at least 24 hours, most suitably at least 7 days, preferably at least 30 days, for example 1.5-24 months.

### Forming of the polymer product

The present polymer dispersion provides polymer products, such as polymer layers, for example in the form of films or coatings, as described in more detail below.

Generally, in order to prepare the polymer product, the polymer which is dispersed into the polymer dispersion, is solidified from the dispersion, in which case it is, for example, subjected to film formation, to produce a polymeric layer.

The crosslinking of the polymer can be achieved by removing the dispersing effect of the surface-active agent or agents.

The polymer can be cross-linked by removing water from the polymer dispersion, or by directing pressure onto the polymer dispersion. For example, water removal or the directing of pressure is performed by applying the dispersion as a layer, either without pressure or spraying the dispersion under pressure against the substrate.

Crosslinking can also be generated by actively changing the pH value of the dispersion. An example of this is a solution where the pH value of the dispersion is converted to neutral.

### Forming of the coating

As described above, in one preferred embodiment, a coating is formed from the present polymer dispersion, on a suitable substrate.

If the polymer dispersion mixture is applied using high pressure spraying, the method preferably comprises at least the following steps:
a) forming, in particular, an aqueous polymer dispersion mixture of at least two polymer dispersions having different particle sizes,
b) adding a solid matter mixture to the polymer dispersion mixture formed in step a), which mixture comprises one or more iron or aluminium compounds or a mixture thereof, and one or more precipitating substances (coagulator),
c) homogenising the polymer dispersion by stirring, in order to achieve the coating liquid, and
d) applying the coating liquid generated in step b) onto the substrate.

The product can be applied onto a solid substrate, textile or a mesh, by high pressure spraying.

The forming of a coating by high pressure spraying offers many benefits. Spraying makes it easy to treat large surface areas relatively quickly. Also, treating vertical or downwardly oriented surfaces is relatively easy.

Typically, when the coating liquid is sprayed it is brought to a pressure of 100-600 bar, preferably 200-500 bar.

According to one embodiment of the present invention, the dispersion is applied to the surface, textile or mesh to be coated, by brushing. This embodiment most suitably comprises at least the following steps:
a) forming an aqueous polymer dispersion mixture of at least two polymer dispersions having different particle sizes,
b) adding a solid matter mixture to the polymer dispersion mixture formed in step a), which mixture comprises one or more iron or aluminium compounds or a mixture thereof, and one or more precipitating agent (coagulator), and
(c) applying by brushing the coating liquid generated in step b) onto the surface to be coated.

This application method is particularly suited for treating and coating smaller surface areas.

The polymer dispersions of the examples described below are anionically dispersed, but they may also be cationically dispersed, in which case the neutralisation takes place by means of a base, respectively.

During or after the applying, the dispersed polymer is precipitated from the dispersion in order to form the coating by the formation of a film. The coagulating agent which is used for the crosslinking of the dispersion generates a controlled precipitation of the dispersion. In this case, the film formation takes place, for example, when the water exits or, especially in the case of high-pressure spraying, under pressure.

The coating generated by the method according to the present invention is elastic, extensible and flexible and does not peel off or crack.

The thickness of the coating is generally approximately 0.1-50 mm, especially approximately 0.5-25 mm.

### Examples

### Example 1

Four compositions were prepared by using the method described above.

In the method, to start with, a first alkaline acrylate copolymer dispersion having a polymer particle size of approximately 500 nm and a dry matter content of approximately 60 % by weight (dispersion I) was mixed with a second alkaline acrylic copolymer dispersion having a polymer particle size of approximately 100 nm and a dry matter content of approximately 40 % by weight (dispersion II).

After that, finely divided iron (II)-bearing iron oxide and aluminium oxide were gradually added while briskly stirring. Finally, hydrophilic vaporised silicon dioxide and hydrophobic vaporised silicon dioxide were added in the form of a powder and, if necessary, also the amount of water needed to achieve the desired level of dry matter, after which the dispersion thus obtained was homogenised.

Tables 1-4 show the percentages of the substances of four different compositions. In the examples, mixed dispersions of acrylate are used, which correspond to the abovementioned dispersions I and II, hydrophobic silicon dioxide having an average particle size of approximately 20 nm, hydrophilic silicon dioxide having an average particle size of approximately 10 nm and iron (II, III) oxide having an average particle size of approximately 200 nm and aluminium hydroxide, having an average particle size of approximately 1.7 µm.

**Table 1**

| | |
|---|---|
| Polymer 1 | 64.4 % |
| Polymer 2 | 23.9 % |
| Iron oxide | 10.6 % |
| Hydrophobic silicon dioxide | 1.1 % |
| Dry matter content | 60.8 % |

**Table 2**

| | |
|---|---|
| Polymer 1 | 62.8 % |
| Polymer 2 | 15.5 % |
| Iron oxide | 19.2 % |
| Hydrophobic silicon dioxide | 2.5 % |
| Dry matter content | 66.2 % |

**Table 3**

| | |
|---|---|
| Polymer 1 | 70.9 % |
| Polymer 2 | 15.6 % |
| Iron oxide | 11.2 % |
| Aluminium hydroxide | 0.4 % |
| Hydrophobic silicon dioxide | 0.5 % |
| Hydrophilic silicon dioxide | 1.4 % |
| Dry matter content | 62.9 % |

**Table 4**

| | |
|---|---|
| Polymer 1 | 67.8 % |
| Polymer 2 | 17.0 % |
| Iron oxide | 10.2 % |
| Aluminum hydroxide | 2.1 % |
| Hydrophobic silicon dioxide | 0.5 % |
| Hydrophilic silicon dioxide | 2.5 % |
| Dry matter content | 62.8 % |

### Example 2

Compositions 3 and 4 according to Example 1 were brushed onto 13 mm thick gypsum boards, the size of which was 500 mm x 600 mm, and, correspondingly, onto concrete slabs, the size of which was 300 mm x 300 mm. The surface of the concrete slabs used in the tests had been sand blasted.

Corresponding applications were carried out by spraying.

From the samples were determined the properties, the determining methods, the measurement results; "Märkätilojen vedeneristeiden ja pintajärjestelmien sertifiointiperusteet VTT SERT R003" ("Certification criteria for wet room waterproofing and surface systems VTT SERT R003 ").

From the measurement results it was possible to conclude that the product is waterproof and thus acts as a waterproofing agent.

The water vapor resistance Z of the product applied by hand was 5.8 x 109 (m² s Pa/kg) having an average layer thickness of 0.6 mm, and of a mechanically sprayed 5.3 x 109 (m² s Pa/kg) having a layer thickness of 0.3 mm. The crosslinking of the cracks of the composition applied by hand on the concrete was measured at room temperature to be 10.3 mm.

It was possible to affect the elasticity, hardness and strength properties of the generated coating by changes in the number of polymers, the ratio between the various polymers, the composition of the aggregate, and the number of coagulators.

### Industrial Applicability

The present polymer-solid matter combination has very interesting properties. Thus, a film and coating can be formed which have good breathability and water vapour permeability. Due to the good adhesion of the coating or film, it is also possible to make it adhere to damp or even wet surfaces. The coating or film also has good elasticity. Creep tests have shown that the material is a viscoelastic elastomer. Therefore, both a coating and a film adapts, for example, to the surface of an uneven substrate.

As described above, the polymer-solid matter combination is suitable, among others, as a moisture barrier of structures, waterproofing and for repairing leakage of all types of structures. It can be used on various roofs, balcony surfaces, asphalt surfaces; basins and tanks; footings and foundations; in bathrooms, saunas and other humid rooms, both in industry and in construction, as well as in land, road and bridge construction. The roofs to be coated can have for example, felt, tin or cement coated fibreboard surfaces.

The polymer-solid matter mixture which is precipitated from the dispersion has good adhesive properties, which is why it can also be used for coating of both horizontal and vertical structures, even the inner surfaces of roofs.

The dispersion can also be used for coating porous materials.

Due to its good adhesion, the mixture is also suitable as an adhesive. The dispersion can be used as a building adhesive. For example, to provide flexible adhesive material joints between objects or structures. The coating generated by the method according to the present invention is also suitable, in different ways, for joining materials, the heat expansion of which are different. With this coating it is possible to join, for example, metal and wood.

The polymer-solid matter mixture which is precipitated from the dispersion has good adhesive properties, which is why it can also be used for coating of both horizontal and vertical structures, even the inner surfaces of roofs.

The dispersion can also be used for coating of porous materials.
Due to its adhesive properties and flexibility, the mixture is also suitable as a jointing compound; it can be used to fill the gaps between objects and structures. Examples of these include jointing of plates which are ceramic and made of rock material. Furthermore, the composition according to the present invention is suitable for the crosslinking, densifying and filling of expansion joints, cracks or slits.

The dispersion is also suitable for the production of polymer films, for example self-supporting polymer films.

In one embodiment, fabrics or films which are suitable for guiding leachates are produced from the present dispersion. Textile or non-woven products can in this case be coated with a polymer layer formed of the dispersion, in order to generate a water impermeable fabric. Alternatively, a water-impermeable film is generated by forming a polymer film, in particular a self-supporting polymer film.

A polymer-solid matter mixture generated from the dispersion by precipitating has excellent weather resistance, which is why it is suitable for both indoor and outdoor use.

The present invention is not intended to be limited only to the embodiments shown exemplified above but, on the contrary, is intended to be broadly interpreted within the scope of protection determined by the claims described below.

The following embodiments represent preferred solutions:
1. An elastic coating based on a water-based polymer dispersion, **characterized** in that it is a strengthened molecular cross-linked structure consisting of
   a) a polymer dispersion having a multimodal particle size distribution,
   b) dispersed metal compounds, and
   c) additives such as aluminum hydroxide or silicon dioxide.
2. A dispersion according to Embodiment 1, which forms a strengthened film that is based on a cross-linked structure, based on the chemical interactions between the components a), b) and c) described in Claim 1, and on the cross-linked structure thus generated.

### Reference publications

EP 0 794 018 A2
EP 1 544 268 A1

## Claims

1. A water-based polymer dispersion, which comprises
- a polymer part, and
- aggregate particles, which are mixed with the polymer part,
**characterized in that**
- the polymer part comprises acrylate polymer which is in the form of particles and has a multimodal particle size distribution, and
- the aggregates are formed of the particles of a metal compound, in which case the polymer dispersion also comprises a coagulator of a mixture of the above components,
wherein the polymer dispersion comprises, of 100 parts per weight of dispersed material:
- 70-90 parts per weight of acrylate polymer,
- 5-15 parts per weight of aggregate particles, and
- 0.1-5 parts per weight of coagulator which is silicon dioxide, hydrophobic silicon dioxide or a mixture thereof.

2. The polymer dispersion according to Claim 1, **characterized in that** the dispersion comprises surface-active agent, in order to disperse the polymer part.

3. A polymer dispersion according to any of the preceding claims, **characterized in that** the coagulator or coagulators comprise a hydrophobic component.

4. A polymer dispersion according to any of the preceding claims, **characterized in that** the coagulator comprises finely divided silicon dioxide, having an average particle size of 5-100 nm, in particular vaporised silicon dioxide, preferably hydrophobic silicon dioxide.

5. A polymer dispersion according to any of the preceding claims, **characterized in that** the dispersion comprises at least two acrylate polymers or a copolymer, which consists of at least two acrylate monomers of different types.

6. A polymer dispersion according to any of the preceding claims, **characterized in that** the aggregate or aggregates included in the dispersion comprise an iron and/or aluminium compound or compounds, such as iron oxide, aluminium oxide or aluminium hydroxide, or a mixture thereof.

7. A polymer dispersion according to any of the preceding claims, **characterized in that** the weight ratio of the particulate iron compounds and aluminium compounds in the aggregate is in the range 1:99-1:1, for example 1:50-1:2, preferably in the range 1:9-1:3.

8. A polymer dispersion according to any of the preceding claims, **characterized in that** the dry matter content of the dispersion is at least 55 %, most suitably 60-75 %, calculated from the weight of the dispersion, in which case the polymer dispersion is suitable for forming the coating onto the substrate, by mechanically applying the dispersion.

9. A polymer dispersion according to any of the preceding claims, **characterized in that** the polymer part comprises a mixture, which is formed of at least two polymer dispersions, the polymers of which have different average particle sizes, preferably the dispersion comprises, mixed with each other, a first polymer, which has a first particle size, and a second polymer, which has a second particle size, in which case the ratio between the first and the second particle size is 2:1-25:1, most suitably 3:1-10:1.

10. A polymer dispersion according to any of the preceding claims, **characterized in that** the dispersion comprises, mixed with each other, a first polymer, which comprises an acrylate polymer, in particular an acrylate copolymer, the polymer particle size of which is approximately 500±50 nm, and a second acrylate polymer, in particular an acrylate copolymer, the polymer particle size of which is 100±10 nm.

11. A polymer dispersion according to any of the preceding claims, **characterized in that** it is at least essentially free from organic solvents, in particular the dispersion medium of the polymer dispersion is water.

12. A polymer dispersion according to any of the preceding claims, **characterized in that** it comprises, of 100 parts per weight of dispersed material
- 70-90 parts per weight of a mixture of two acrylate polymers,
- 5-15 parts per weight of aggregate particles which are iron oxide, aluminium oxide or a mixture thereof, and
- 0.1-5 parts per weight of coagulator which is silicon dioxide, hydrophobic silicon dioxide or a mixture thereof,
preferably the polydispersity index of the particle size of the polymer dispersion being above 2.

13. A method of preparing a polymer dispersion according to any of Claims 1-12, **characterized in that**
- a polymer dispersion is generated, which comprises at least two polymers, which are dispersed into water by using a surface-active agent, and the particles of which polymers have different sizes, and
- metal compound particles and a coagulator are added to the polymer dispersion, while mixing,
preferably the polymer dispersion is generated by mixing with each other a dispersion formed of the first polymer and a dispersion formed of the second polymer, in which case the polymers have different particle sizes.

14. A method according to Claim 13, **characterized in that** the pH value of the dispersion is maintained, during the addition of the metal compound particles and the coagulator, at a pH value, which is outside the pH range, where solidification of the polymers and the metal compound particles from the dispersion takes place.

15. A method according to any of Claims 13 or 14, **characterized in that** the pH value of the dispersion is maintained, during the addition of the metal compound particles and the coagulator, at a value which is above 7, at which point the polymer dispersions are anionically stabilised.

16. A method according to any of Claims 13-15, **characterized in that** the pH value of the dispersion is maintained, during the addition of the metal compound particles and the coagulator, at a value which is below 6.5, at which point the polymer dispersions are cationically stabilised.

17. A method according to any of Claims 13-16, **characterized by** adding to a dispersion, according any of Claims 1-15, 1-75 parts per weight of filler, per 100 parts per weight of the dispersion, preferably the generated dispersion is homogenized in order to form a stable dispersion.

18. A method according to any of Claims 13-17, **characterized in that** the metal compound particles are metal oxide or metal sulphate.

19. A method according to any of Claims 13-18, **characterized by**
- forming a mixture of polymer dispersions of the first and the second polymer, wherein the first polymer comprises an acrylate polymer, in particular an acrylate copolymer, the polymer particle size of which is 500±50 nm, and the second polymer comprises an acrylate polymer, in particular an acrylate copolymer, the polymer particle size of which is 100±10 nm, and
- adding into the mixture thus obtained, while mixing, an iron or an aluminium compound or a mixture thereof, as well as silicon dioxide or hydrophobic silicon dioxide, or a mixture thereof.

## Patentansprüche

1. Auf Wasser basierende Polymerdispersion, umfassend
- einen Polymerteil und
- Zuschlagstoffpartikel, die mit dem Polymerteil vermischt sind,
**dadurch gekennzeichnet, dass**
- der Polymerteil Acrylatpolymer umfasst, das in Form von Partikeln vorliegt und eine multimodale Partikelgrößenverteilung aufweist, und
- die Zuschlagstoffe aus den Partikeln einer Metallverbindung gebildet sind, wobei die Polymerdispersion in diesem Fall auch einen Koagulator einer Mischung aus den obigen Bestandteilen umfasst,
wobei die Polymerdispersion bezogen auf 100 Gewichtsteile des dispergierten Materials Folgendes umfasst:
- zu 70-90 Gewichtsteilen Acrylatpolymer,
- zu 5-15 Gewichtsteilen Zuschlagstoffpartikel und
- zu 0,1-5 Gewichtsteilen Koagulator, der Siliziumdioxid, hydrophobes Siliziumdioxid oder eine Mischung davon ist.

2. Polymerdispersion nach Anspruch 1, **dadurch gekennzeichnet, dass** die Dispersion einen oberflächenaktiven Stoff umfasst, um den Polymerteil zu dispergieren.

3. Polymerdispersion nach einem der vorstehenden Ansprüche, **dadurch gekennzeichnet, dass** der Koagulator oder die Koagulatoren einen hydrophoben Bestandteil umfasst/umfassen.

4. Polymerdispersion nach einem der vorstehenden Ansprüche, **dadurch gekennzeichnet, dass** der Koagulator fein verteiltes Siliziumdioxid, das eine durchschnittliche Partikelgröße von 5-100 nm aufweist, insbesondere verdampftes Siliziumdioxid, vorzugsweise hydrophobes Siliziumdioxid, umfasst.

5. Polymerdispersion nach einem der vorstehenden Ansprüche, **dadurch gekennzeichnet, dass** die Dispersion mindestens zwei Acrylatpolymere oder ein Copolymer, das aus mindestens zwei Acrylatmonomeren unterschiedlicher Arten besteht, umfasst.

6. Polymerdispersion nach einem der vorstehenden Ansprüche, **dadurch gekennzeichnet, dass** der in der Dispersion enthaltene Zuschlagstoff eine Eisen- und/oder Aluminiumverbindung oder -verbindungen, beispielsweise Eisenoxid, Aluminiumoxid oder Aluminiumhydroxid oder eine Mischung davon, umfassen.

7. Polymerdispersion nach einem der vorstehenden Ansprüche, **dadurch gekennzeichnet, dass** das Gewichtsverhältnis der partikelförmigen Eisenverbindungen und Aluminiumverbindungen in dem Zuschlagstoff im Bereich von 1: 99-1: 1, zum Beispiel bei 1 : 50-1 : 2, vorzugsweise im Bereich von 1 : 9-1 : 3, liegt.

8. Polymerdispersion nach einem der vorstehenden Ansprüche, **dadurch gekennzeichnet, dass** der Trockensubstanzgehalt der Dispersion, berechnet anhand des Gewichts der Dispersion, mindestens 55 %, am geeignetsten 60-75 % beträgt, wobei die Polymerdispersion in diesem Fall zum Bilden der Beschichtung auf dem Substrat durch mechanisches Aufbringen der Dispersion geeignet ist.

9. Polymerdispersion nach einem der vorstehenden Ansprüche, **dadurch gekennzeichnet, dass** der Polymerteil eine Mischung umfasst, die aus mindestens zwei Polymerdispersionen gebildet ist, deren Polymere unterschiedliche durchschnittliche Partikelgrößen aufweisen, wobei die Dispersion vorzugsweise ein erstes Polymer, das eine erste Partikelgröße aufweist, und ein zweites Polymer, das eine zweite Partikelgröße aufweist, miteinander vermischt umfasst, wobei das Verhältnis zwischen der ersten und der zweiten Partikelgröße in diesem Fall 2 : 1-25 : 1, am geeignetsten 3 : 1-10 : 1 beträgt.

10. Polymerdispersion nach einem der vorstehenden Ansprüche, **dadurch gekennzeichnet, dass** die Dispersion Folgendes miteinander vermischt umfasst: ein erstes Polymer, das ein Acrylatpolymer, insbesondere ein Acrylatcopolymer, dessen Polymerpartikelgröße etwa 500±50 nm beträgt, umfasst, und ein zweites Acrylatpolymer, insbesondere ein Acrylatcopolymer, dessen Polymerpartikelgröße 100 ± 10 nm beträgt.

11. Polymerdispersion nach einem der vorstehenden Ansprüche, **dadurch gekennzeichnet, dass** sie mindestens im Wesentlichen frei von organischen Lösemitteln ist, insbesondere dass das Dispersionsmedium der Polymerdispersion Wasser ist.

12. Polymerdispersion nach einem der vorstehenden Ansprüche, **dadurch gekennzeichnet, dass** sie bezogen auf 100 Gewichtsteile des dispergierten Materials Folgendes umfasst:
- zu 70-90 Gewichtsteilen eine Mischung aus zwei Acrylatpolymeren,
- zu 5-15 Gewichtsteilen Zuschlagstoffpartikel, die Eisenoxid, Aluminiumoxid oder eine Mischung davon sind, und
- zu 0,1-5 Gewichtsteilen Koagulator, der Siliziumdioxid, hydrophobes Siliziumdioxid oder eine Mischung davon ist,
wobei der Polydispersitätsindex der Partikelgröße der Polymerdispersion vorzugsweise über 2 liegt.

13. Verfahren zur Herstellung einer Polymerdispersion nach einem der Ansprüche 1-12, **dadurch gekennzeichnet, dass**
- eine Polymerdispersion erzeugt wird, die mindestens zwei Polymere umfasst, die unter Verwendung eines oberflächenaktiven Stoffs in Wasser dispergiert werden, und die Partikel dieser Polymere unterschiedliche Größen aufweisen, und
- der Polymerdispersion während des Mischens Metallverbindungspartikel und ein Koagulator zugegeben werden,
wobei die Polymerdispersion vorzugsweise durch Mischen einer aus dem ersten Polymer gebildeten Dispersion und einer aus dem zweiten Polymer gebildeten Dispersion miteinander erzeugt wird, wobei die Polymere in diesem Fall unterschiedliche Partikelgrößen aufweisen.

14. Verfahren nach Anspruch 13, **dadurch gekennzeichnet, dass** der pH-Wert der Dispersion während der Zugabe der Metallverbindungspartikel und des Koagulators bei einem pH-Wert gehalten wird, der außerhalb des pH-Wert-Bereichs liegt, in dem die Verfestigung der Polymere und der Metallverbindungspartikel aus der Dispersion erfolgt.

15. Verfahren nach einem der Ansprüche 13 oder 14, **dadurch gekennzeichnet, dass** der pH-Wert der Dispersion während der Zugabe der Metallverbindungspartikel und des Koagulators bei einem Wert über 7 gehalten wird, bei dem die Polymerdispersionen anionisch stabilisiert werden.

16. Verfahren nach einem der Ansprüche 13-15, **dadurch gekennzeichnet, dass** der pH-Wert der Dispersion während der Zugabe der Metallverbindungspartikel und des Koagulators bei einem Wert unter 6,5 gehalten wird, bei dem die Polymerdispersionen kationisch stabilisiert werden.

17. Verfahren nach einem der Ansprüche 13-16, **gekennzeichnet durch** Zugabe von 1-75 Gewichtsteilen Füllstoff pro 100 Gewichtsteile der Dispersion zu einer Dispersion nach einem der Ansprüche 1-15, wobei die erzeugte Dispersion vorzugsweise homogenisiert wird, um eine stabile Dispersion zu bilden.

18. Verfahren nach einem der Ansprüche 13-17, **dadurch gekennzeichnet, dass** die Metallverbindungspartikel Metalloxid oder Metallsulfat sind.

19. Verfahren nach einem der Ansprüche 13-18, **gekennzeichnet durch**
- Bilden einer Mischung von Polymerdispersionen aus dem ersten und dem zweiten Polymer, wobei das erste Polymer ein Acrylatpolymer, insbesondere ein Acrylatcopolymer, dessen Polymerpartikelgröße 500 ± 50 nm beträgt, umfasst, und das zweite Polymer ein Acrylatpolymer, insbesondere ein Acrylatcopolymer, dessen Polymerpartikelgröße 100 ± 10 nm beträgt, umfasst, und
- Zugeben einer Eisen- oder Aluminiumverbindung oder einer Mischung davon sowie von Siliziumdioxid oder hydrophobem Siliziumdioxid oder einer Mischung davon zu der so erhaltenen Mischung während des Mischens.

## Revendications

1. Dispersion de polymère à base d'eau, qui comprend
- une partie polymère, et
- des particules agrégées, qui sont mélangées avec la partie polymère, **caractérisée en ce que**
- la partie polymère comprend un polymère d'acrylate qui est sous forme de particules et présente une distribution granulométrique multimodale, et
- les agrégats sont formés des particules d'un composé métallique, auquel cas la dispersion de polymère comprend également un coagulateur d'un mélange des composants ci-dessus,
dans laquelle la dispersion de polymère comprend, pour 100 parties en poids de matière dispersée :
- 70 à 90 parties en poids d'un polymère d'acrylate,
- 5 à 15 parties en poids de particules agrégées, et
- 0,1 à 5 parties en poids d'un coagulateur qui est un dioxyde de silicium, un dioxyde de silicium hydrophobe ou un mélange de ceux-ci.

2. Dispersion de polymère selon la revendication 1, **caractérisée en ce que** la dispersion comprend un agent tensioactif, afin de disperser la partie polymère.

3. Dispersion de polymère selon l'une quelconque des revendications précédentes, **caractérisée en ce que** le coagulateur ou les coagulateurs comprennent un composant hydrophobe.

4. Dispersion de polymère selon l'une quelconque des revendications précédentes, **caractérisée en ce que** le coagulateur comprend un dioxyde de silicium finement divisé, présentant une taille particulaire moyenne de 5 à 100 nm, en particulier un dioxyde de silicium vaporisé, de préférence un dioxyde de silicium hydrophobe.

5. Dispersion de polymère selon l'une quelconque des revendications précédentes, **caractérisée en ce que** la dispersion comprend au moins deux polymères d'acrylate ou un copolymère, qui consiste en au moins deux monomères d'acrylate de différents types.

6. Dispersion de polymère selon l'une quelconque des revendications précédentes, **caractérisée en ce que** l'agrégat ou les agrégats inclus dans la dispersion comprennent un composé ou des composés de fer et/ou d'aluminium, tels qu'un oxyde de fer, un oxyde d'aluminium ou un hydroxyde d'aluminium, ou un mélange de ceux-ci.

7. Dispersion de polymère selon l'une quelconque des revendications précédentes, **caractérisée en ce que** le rapport pondéral des composés de fer et des composés d'aluminium particulaires dans l'agrégat est dans la plage allant de 1:99 à 1:1, par exemple de 1:50 à 1:2, de préférence dans la plage allant de 1:9 à 1:3.

8. Dispersion de polymère selon l'une quelconque des revendications précédentes, **caractérisée en ce que** la teneur en matière sèche de la dispersion est d'au moins 55 %, de manière la plus appropriée de 60 à 75 %, calculée à partir du poids de la dispersion, auquel cas la dispersion de polymère est appropriée pour former le revêtement sur le substrat, en appliquant mécaniquement la dispersion.

9. Dispersion de polymère selon l'une quelconque des revendications précédentes, **caractérisée en ce que** la partie polymère comprend un mélange, qui est formé d'au moins deux dispersions de polymère, dont les polymères présentent des tailles particulaires moyennes différentes, de préférence la dispersion comprend, mélangés les uns avec les autres, un premier polymère, qui présente une première taille particulaire, et un second polymère, qui présente une seconde taille particulaire, auquel cas le rapport entre la première et la seconde taille particulaire est de 2:1 à 25:1, de manière la plus appropriée de 3:1 à 10:1.

10. Dispersion de polymère selon l'une quelconque des revendications précédentes, **caractérisée en ce que** la dispersion comprend, mélangés les uns avec les autres, un premier polymère, qui comprend un polymère d'acrylate, en particulier un copolymère d'acrylate, dont la taille particulaire de polymère est d'approximativement 500 ± 50 nm, et un second polymère d'acrylate, en particulier un copolymère d'acrylate, dont la taille particulaire de polymère est de 100 ± 10 nm.

11. Dispersion de polymère selon l'une quelconque des revendications précédentes, **caractérisée en ce qu'**elle est au moins essentiellement exempte de solvants organiques, en particulier le milieu de dispersion de la dispersion de polymère est de l'eau.

12. Dispersion de polymère selon l'une quelconque des revendications précédentes, **caractérisée en ce qu'**elle comprend, pour 100 parties en poids de matière dispersée
- 70 à 90 parties en poids d'un mélange de deux polymères d'acrylate,
- 5 à 15 parties en poids de particules agrégées qui sont un oxyde de fer, un oxyde d'aluminium ou un mélange de ceux-ci, et
- 0,1 à 5 parties en poids d'un coagulateur qui est un dioxyde de silicium, un dioxyde de silicium hydrophobe ou un mélange de ceux-ci,
de préférence l'indice de polydispersité de la taille particulaire de la dispersion de polymère est supérieur à 2.

13. Procédé de préparation d'une dispersion de polymère selon l'une quelconque des revendications 1 à 12, **caractérisé en ce que**
- une dispersion de polymère est générée, qui comprend au moins deux polymères, qui sont dispersés dans de l'eau en utilisant un agent tensioactif, et les particules de ces polymères présentent des tailles différentes, et
- des particules de composé métallique et un coagulateur sont ajoutés à la dispersion de polymère, tout en mélangeant,
de préférence la dispersion de polymère est générée en mélangeant l'une avec l'autre une dispersion formée du premier polymère et une dispersion formée du second polymère, auquel cas les polymères présentent des tailles particulaires différentes.

14. Procédé selon la revendication 13, **caractérisé en ce que** la valeur de pH de la dispersion est maintenue, pendant l'ajout des particules de composé métallique et du coagulateur, à une valeur de pH, qui se trouve hors de la plage de pH, où une solidification des polymères et des particules de composé métallique de la dispersion a lieu.

15. Procédé selon l'une quelconque des revendications 13 ou 14, **caractérisé en ce que** la valeur de pH de la dispersion est maintenue, pendant l'ajout des particules de composé métallique et du coagulateur, à une valeur qui est supérieure à 7, à laquelle les dispersions de polymère sont anioniquement stabilisées.

16. Procédé selon l'une quelconque des revendications 13 à 15, **caractérisé en ce que** la valeur de pH de la dispersion est maintenue, pendant l'ajout des particules de composé métallique et du coagulateur, à une valeur qui est inférieure à 6,5, à laquelle les dispersions de polymère sont cationiquement stabilisées.

17. Procédé selon l'une quelconque des revendications 13 à 16, **caractérisé par** l'ajout à une dispersion, selon l'une quelconque des revendications 1 à 15, 1 à 75 parties en poids d'une charge, pour 100 parties en poids de la dispersion, de préférence la dispersion générée est homogénéisée afin de former une dispersion stable.

18. Procédé selon l'une quelconque des revendications 13 à 17, **caractérisé en ce que** les particules de composé métallique sont un oxyde métallique ou un sulfate métallique.

19. Procédé selon l'une quelconque des revendications 13 à 18, **caractérisé par**
- la formation d'un mélange de dispersions de polymère du premier et du second polymère,
dans lequel le premier polymère comprend un polymère d'acrylate, en particulier un copolymère d'acrylate, dont la taille particulaire de polymère est de 500 ± 50 nm, et le second polymère comprend un polymère d'acrylate, en particulier un copolymère d'acrylate, dont la taille particulaire de polymère est de 100 ± 10 nm, et
- l'ajout au mélange ainsi obtenu, en mélangeant, d'un composé de fer ou d'aluminium ou d'un mélange de ceux-ci, ainsi que d'un dioxyde de silicium ou d'un dioxyde de silicium hydrophobe, ou d'un mélange de ceux-ci.
